# EUROPÄISCHE PATENTANMELDUNG

(11) **EP 2 048 859 A2**
(43) Veröffentlichungstag der Anmeldung: **15.04.2009**
(21) Anmeldenummer: 08166088.8
(22) Anmeldetag: 08.10.2008
(51) Int. Cl.: H04L 29/12, H04L 29/06

(54) **Erzeugung und Verwendung von Virtuellen Identitäten (VID) in Kommunikationsnetzen**

(30) Priorität: 08.10.2007 DE 102007048239
(71) Anmelder: Deutsche Telekom AG, 53113 Bonn (DE)
(72) Erfinder: Siebert, Matthias, 64319, Pfungstadt (DE); Pascotto, Riccardo, 13127, Berlin (DE); Kadel, Gerhard, 64293, Darmstadt (DE); Einsiedler, Hans Joachim, 13189, Berlin (DE)
(74) Vertreter: Vossius & Partner

(57) **Zusammenfassung**

Ein Verfahren zur Erzeugung einer virtuellen Identität unter Berücksichtigung von benutzerspezifischen Attributen/Profilen, Personalisierung und Nutzer-Kontext, die Datenfelder zu einer Nutzerpartei umfasst, wobei die virtuelle Identität eine ein-eindeutige Beziehung kennzeichnet, indem sie Datenfelder zu mindestens einer Zielpartei umfasst. Mit einem solchen Verfahren lassen sich virtuellen Identitäten (VIDs) erzeugen, die nicht nur einen Bezeichner für einen Nutzer darstellen, sondern dessen Kommunikations- und Diensteansprüche sicher regeln. Hierzu gehört, dass sichergestellt wird, dass ein geforderter Dienst auch von einer autorisierten Gegenstelle erbracht wird, ein entsprechender Server somit ebenfalls ein spezielles Vertrauensverhältnis erfüllt. Indem bei der Generierung der VID inhärent ein bestimmter Ziel-Server (bzw. eine Zielpartei) verankert wird, ist sichergestellt, dass eine gegenseitige Freischaltung durch einen ID-Broker erfolgt. Vereinfacht ausgedrückt: Nur der Ziel-Server, für den die VID bestimmt ist, kann für den Nutzer auch den Dienst erbringen. Es liegt somit eine ein-eindeutige Beziehung zugrunde, welche in der VID enthalten ist.

## Beschreibung

### Technisches Gebiet

Die Erfindung betrifft ein Verfahren gemäß dem Oberbegriff des unabhängigen Patentanspruchs 1 sowie ein Computerprogramm und ein System. Solche Verfahren und Computerprogramme mit Datenfeldern zu einer Nutzerpartei können zur Erzeugung von virtuellen Identitäten unter Berücksichtigung von benutzerspezifischen Attributen/Profilen, Personalisierung und Nutzer-Kontext eingesetzt werden.

### Stand der Technik

Der Spezifikation des IP Multimedia Subsystems (IMS) durch 3rd Generation Partnership Program (3GPP) in Release 5 (2003) lag ein Paradigmenwechsel zugrunde: Erstmals lag der Fokus nicht auf der Definition neuer Dienste selber, sondern es wurde vielmehr ein Rahmen geschaffen, der es erlaubt, zukünftige neue Dienste zu unterstützen. Dieser generische Ansatz wurde schnell sowohl für Mobilfunknetze als auch für Festnetze verankert, so dass heute allgemein davon ausgegangen werden kann, dass IMS ein zentraler Bestandteil eines konvergenten Netzes der nächsten Generation (Next Generation Network, NGN) sein wird.

Die offenen Schnittstellen von IMS führen dazu, dass Dienste nicht mehr ausschließlich von klassischen Anbietern bereit gestellt werden. Neue Anbieter entstehen oder branchenfremde Unternehmen positionieren sich auf dem Telekommunikationssektor, wie etwa Kabelunternehmen, die ihr ursprüngliches Produktportfolio erweitern. Die Folge dieser rasanten Entwicklung ist ein zunehmend heterogener Markt, auf dem vermehrt viele kleine, stark spezialisierte und flexible Dienstelieferanten neben klassischen Telekommunikationsunternehmen agieren.

Nicht alle Anbieter werden zukünftig jeden Dienst unterstützen. Möglich ist auch eine gemeinschaftliche Erbringung eines Dienstes für den Kunden unter Beteiligung verschiedener Parteien. Hierbei stellt sich die Frage, wie viel Informationen über den Kunden jede einzelne involvierte Instanz wirklich benötigt, oder - aus Kundensicht formuliert - jeder einzelnen involvierten Instanz zugänglich gemacht werden soll. Da der wirtschaftliche Erfolg eines Dienstes ausschließlich von der Akzeptanz des Kunden abhängt, ist es das ureigene Interesse des Anbieters, Kundenvertrauen aufzubauen. Nur dann sind Kunden bereit, die zur Erbringung eines Dienstes notwendigen persönlichen Daten, bzw. deren Speicherung in Form von Profilen und Policen zu akzeptieren. Der Schutz der Privatsphäre steht somit an höchster Stelle. Dem legitimen Recht auf Anonymität stehen jedoch Rahmenbedingungen gegenüber, wie sie durch geltendes Recht geschaffen werden, oder aber die Notwendigkeit zur eindeutigen Nachverfolgbarkeit zum Zwecke der Gebührenerfassung bei Bezahldiensten.

Aktuelle Forschungsprojekte wie DAIDALOS (http://www.ist-daidalos.org/) haben sich dieses Problems angenommen und entwickeln Konzepte, welche Lösungen für die vorgenannten teilweise konträren Anforderungen bieten. Die Grundidee besteht darin, dass sogenannte Virtuelle Identitäten (VID) zum Einsatz kommen, welche den Nutzer und dessen Profil abbilden, so dass auf die Verwendung der realen Identität verzichtet werden kann. Ein Nutzer kann dabei über beliebig viele VIDs verfügen.

Da nicht alle Dienste eine umfassende Offenlegung aller persönlichen Daten erfordern, zeichnen sich VIDs dadurch aus, dass sie nur eine Untermenge der nutzerspezifischen Attribute enthalten und preisgegeben. Gleichzeitig ist aber sichergestellt, dass eine VID jeweils genau einer bestimmten realen Person zugeordnet werden kann. Diese Auflösung ist jedoch nur speziellen, explizit vertrauenswürdigen Stellen möglich, welche funktionale Blöcke zum ID-Brokering und ID-Managing implementieren. ID-Broker übernehmen dabei Proxy-Aufgaben, um abstrahierte VID Bezeichner (VID Identifier, VIDID) real existierenden Teilprofilen (Entitiy Profile Part, EPP) zuzuordnen. Gleichzeitig können sie als Schaltstellen agieren, um bestimmte Dienste für den Nutzer freizuschalten (access control). Die Aufgabe eines ID-Managers ist es, ViDs zu generieren, zu verwalten und auch wieder zu löschen. Zwischen ID-Manager und ID-Broker besteht eine enge Bindung derart, dass der ID-Manager die Verknüpfung zwischen VIDID und den eigentlichen Nutzerdaten herstellt.

Das zuvor beschriebene Konzept der virtuellen Identitäten ist ein wichtiger Schritt, um in einer zunehmend heterogen-digitalen Welt mit zahlreichen Stakeholdern die Privatsphäre des Kunden zu schützen. Allerdings existieren hierbei noch Schwachstellen bzw. vorhandenes Potential wird nicht vollständig genutzt. Dies sind beispielsweise:
- Eindeutigkeit der VID
   VID(ID)s kennzeichnen eindeutig den Nutzer, dessen Teilprofil sowie verbundene Zugangsrechte. Auf Basis der VIDs werden entsprechende Dienste freigeschaltet, welche durch nachgeschaltete Anbieter (Application Server, AS) erbracht werden. Das VID Konzept berücksichtigt jedoch nicht, ob der in Anspruch genommene Server ebenfalls ein spezielles Vertrauensverhältnis erfüllt.
- Lebensdauer einer VID
   Die Aufgabe eines ID-Managers ist es, VIDs zu generieren und später wieder zu löschen. Hierbei bleibt unbeachtet, dass es weitere teilautomatische Verfahren gibt, die dafür sorgen können, dass die Lebensdauer einer VID von vorne herein auf einen bestimmten Zeitraum oder für einen bestimmten Zweck ausgelegt wird.
- Transportbezug
   Die im Stand der Technik genannten VIDs stehen für Service-, Kontext- und Zugangsinformation. Ein Bezug zur eigentlichen Diensterbringung auf Transportebene ist nur bedingt gegeben. So können mittels Nutzerprofile beispielsweise (Wunsch-) Datenraten hinterlegt werden. Eine Verknüpfung zu expliziten Sessions oder Streams ist aber nicht vorgesehen.
- Konzeptrealisierung
   Der Stand der Technik identifiziert funktionale Einheiten, welche für die Realisierung des VID Konzeptes notwendig sind. Deren Einbettung in eine Gesamtarchitektur findet derzeit jedoch nur auf sehr abstrakten Ebenen in Form von high-level Übersichten statt. Im Wesentlichen beschränkt sich diese auf die Benennung von administrativen Domänen (User, Service Provider, Content Provider, Access Network, Service Provisioning Platform,...). Eine Umsetzung/Einbettung der Funktionen in ein Realsystem sowie die konkret notwendigen (adaptierten) Schnittstellen sind nicht benannt.

### Darstellung der Erfindung

Die Verwendung virtueller Identitäten wie sie derzeit diskutiert wird kann entschieden verbessert werden, wenn zwei wesentlichen Aspekte berücksichtigt sind: Zum einen betrifft dies die Erzeugung der VIDs, zum anderen die Art und Weise wie vorhandene VIDs in konkreten System zum Einsatz kommen sollen. Bezogen auf die im Stand der Technik genannten Punkte werden folgende Verbesserungen vorgeschlagen:
- Eindeutigkeit der VID → Ein-Eindeutigkeit der VID
   Es gilt zu berücksichtigen, dass VIDs nicht nur einen Bezeichner für einen Nutzer darstellen, sondern auch dessen Kommunikations- und Diensteansprüche sicher regeln sollen. Hierzu gehört, dass sichergestellt werden muss, dass ein geforderter Dienst auch von einer autorisierten Gegenstelle erbracht wird, ein entsprechender Server somit ebenfalls ein spezielles Vertrauensverhältnis erfüllt. Indem bei der Generierung der VID inhärent ein bestimmter Ziel-Server (bzw. eine bestimmte Gruppe) verankert wird, ist sichergestellt, dass eine gegenseitige Freischaltung durch den ID-Broker erfolgt. Vereinfacht ausgedrückt: Nur der Ziel-Server, für den die VID bestimmt ist, kann für den Nutzer auch den Dienst erbringen. Es liegt somit eine ein-eindeutige Beziehung zugrunde, welche in der VID enthalten ist.
   Der Vorteil, der sich daraus ergibt, ist ein erhöhter Schutz vor Missbrauch bei der Verwendung von VIDs. Falls kein expliziter Ziel-Server angegeben werden soll oder kann, bleibt das Zielfeld leer, so dass bisherige Stand der Technik-Lösungen abwärtskompatibel behandelt werden können.
- Lebensdauer einer VID → einschränken
   VIDs sollten abhängig vom Dienst, den sie freischalten, nur mit einer begrenzten Gültigkeit ausgestattet werden. Bei Bedarf kann ein Refresh Mechanismus zugelassen werden, der verhindert, dass eine oftmals gebrauchte VID vorzeitig ungültig wird.
   Der Vorteil, der sich daraus ergibt, besteht darin, dass die Gefahr des Missbrauchs durch bösartige Nutzung seitens Dritter mit ,alten' VIDs reduziert wird. Gleichzeitig erleichtern selbstterminierende VIDs die Verwaltung, da kein expliziter Prozess zu deren Löschung/Deaktivierung angestoßen werden muss.
- Transportbezug → verknüpfen
   Eine Verknüpfung von VIDs zu expliziten Sessions oder Streams ist ein weiteres neues Feature. Auf diese Weise ist eine VID nur für ganz bestimmte Aufgaben brauchbar und ergänzt den Vorschlag einer nur zeitlich gültigen VID. Da einem Nutzer beliebig viele VIDs zugeordnet werden können, erweitert dieser Vorschlag den Gebrauch von VIDs im Sinne der Einmalnutzung.
   Der Vorteil, der sich hieraus ergibt, ist neben einer Steigerung der Sicherheit auch die Möglichkeit, unterschiedliche Ansprüche an zwei verschiedene Streams zu stellen. Repräsentieren diese beiden Streams z.B. uplink und downlink innerhalb der gleichen Punkt-zu-Punkt Verbindung, so kann nunmehr für die eine Richtung eine andere Police Anwendung finden als für die andere Richtung.
- Konzeptrealisierung → Umsetzung
   Ein konkretes System zur Umsetzung des hier vorgeschlagenen erweiterten VID Konzeptes besteht aus Basiskomponenten des IP Multimedia Subsytems (IMS). Eine spezielle VID-Engine ist vorgesehen, um die erweiterten Funktionen bei der Erzeugung der VIDs zu berücksichtigen. Die VID-Engine ist somit ein logischer Bestandteil des ID-Managers und ist im Kontext eines erweiterten Home Subscriber Server (HSS) anzusiedeln. Über die Cx' Schnittstelle (= Cx Schnittstelle + Zusatzfunktionen, um den neuen VID-Typ zu transportieren) kommuniziert das HSS die VIDs an das S-CSCF, welches seinerseits die Filterkriterien für die Steuerung der ISC-Schnittstelle festlegt. Die erweiterte VID bewirkt also, dass über die ISC-Schnittstelle nur Information transportiert werden können, die zu einem bestimmten Nutzer und gleichzeitig zu einem bestimmten Anwendungsserver gehören.
   Das hier vorgestellte Modell beschreibt erstmals konkret eine Umsetzung des VID-Konzepts auf Basis von IMS Komponenten. Die erforderlichen Funktionalitäten können dabei überwiegend mittels Softwareupdates eingespielt werden, so dass Kosten für Hardwareerweiterungen weitestgehend umgangen werden können.

Insbesondere schlägt die Erfindung ein Verfahren zur Erzeugung einer Datenfelder zu einer Nutzerpartei umfassenden virtuellen Identität unter Berücksichtigung von benutzerspezifischen Attributen/Profilen, Personalisierung und Nutzer-Kontext vor, wobei die virtuelle Identität eine ein-eindeutige Beziehung kennzeichnet, indem sie Datenfelder zu mindestens einer Zielpartei umfasst. Vorzugsweise kennzeichnet dabei die virtuelle Identität eine ein-eindeutige Beziehung, indem sie verschiedene Zielparteien sowohl einzeln als auch in Gruppen ansprechbar sind. Mit Vorteil wird die virtuelle Identität so erzeugt, dass zur Verwendung der virtuellen Identität nicht notwendigerweise Daten in die Datenfelder der Zielpartei eingetragen sein müssen, so dass auch Abwärtskompatibilität mit virtuellen Identitäten aus dem Stand der Technik möglich ist.

Vorzugsweise weist die virtuelle Identität eine begrenzte Gültigkeit auf und ist nur temporär anwendbar, wobei sie sich bei Ablauf selbst terminiert, austrägt und löscht. Mit Vorteil ist die Gültigkeit der virtuellen Identität durch einen optionalen Refresh-Mechanismus verlängerbar.

Vorzugsweise wird die virtuelle Identität session/service/stream spezifisch generiert wird, so dass sie nur für einen bestimmten Zweck existiert und zur Einmalnutzung vorgesehen ist. Dabei umfasst die virtuelle Identität mit Vorteil ein Attribut für uplink oder ein Attribut für downlink.

Ein weiterer Aspekt der Erfindung betrifft ein Computerprogramm zur Durchführung des oben beschriebenen Verfahrens.

Ein anderer weiterer Aspekt der Erfindung betrifft ein System zur Erbringung von Multimedia-Diensten unter Wahrung der Privatsphäre bei sicherer gegenseitiger Authentifizierung, das ein standardisiert aufgebautes IP Multimedia Subsystem umfasst. Dabei weist das IP Multimedia Subsystem eine VID-Engine als Teil einer erweiterten HSS Funktionalität, einen ID-Broker als Teil einer erweiterten CSCF Funktionalität und eine Schnittstelle ISC' als Filter für virtuelle Identität relevante System- und Dienstesteuerung auf, wobei eine Schnittstelle Cx des IP Multimedia Subsystems um die zur Übertragung virtueller Identität relevanter Aspekte erweitert ist (Cx').

Vorzugsweise ist die ISC' Schnittstelle durch den ID-Broker und das S-CSCF des IP Multimedia Subsystems steuerbar. Mit Vorteil ist eine virtuelle Identität über das ISC' Interface an einen Diensteanbieter kommunizierbar.

### Kurze Beschreibung der Zeichnungen

Im Folgenden wird die Erfindung unter Bezugnahme auf die beigefügten Zeichnungen anhand von Ausführungsbeispielen detaillierter beschrieben. Es zeigen:
- Fig. 1: eine schematische Darstellung der Ein-Eindeutigkeit von VIDs bei der Nutzung von Diensten;
- Fig. 2: eine schematische Darstellung der Verwendung von VIDs mit eingeschränkter Lebensdauer;
- Fig. 3: eine schematische Darstellung des Einmalgebrauchs von VIDs und deren Anwendung auf Steam Basis; und
- Fig. 4: eine schematische Darstellung des Systemdesigns zum Umgang mit VIDs ein einer erweiterten IMS Umgebung.

### Weg(e) zur Ausführung der Erfindung

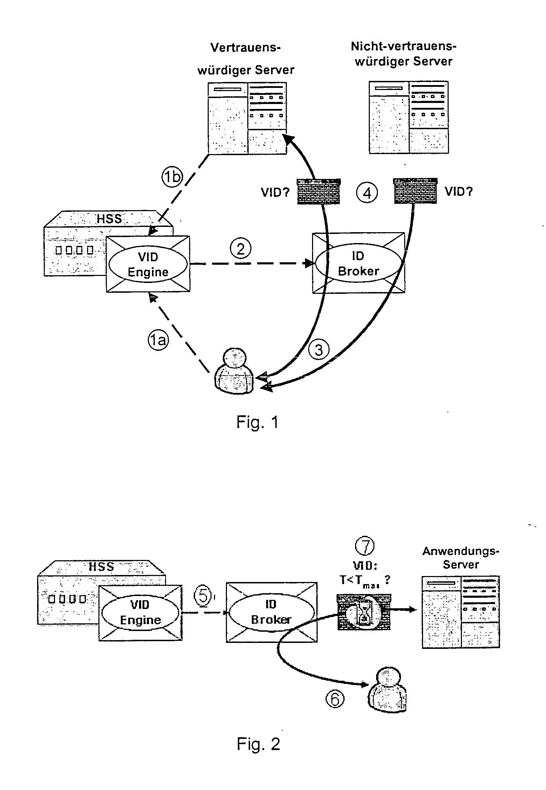

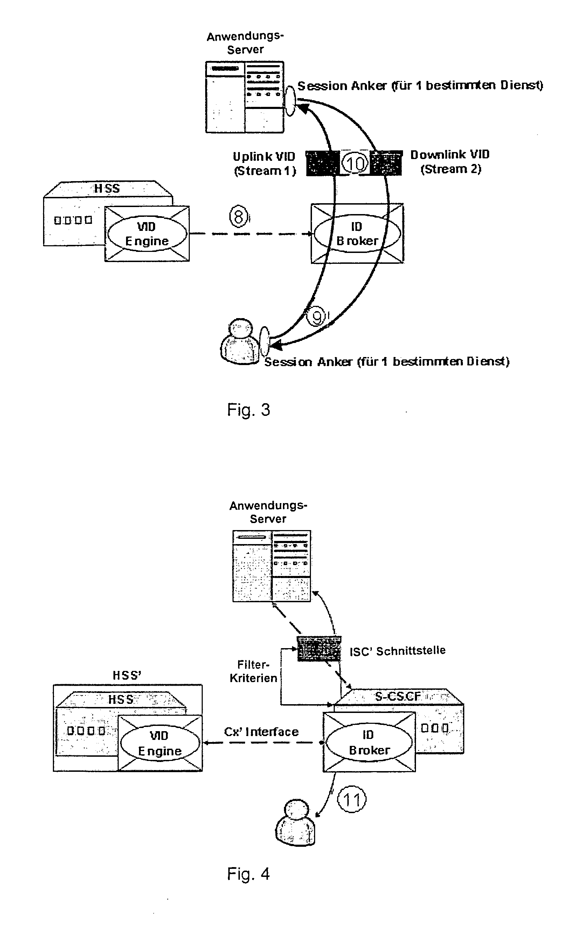

Im Folgenden werden die Vorteile der vorgeschlagenen Verbesserungen im Detail erklärt und teilweise durch die Figuren ergänzt und verdeutlicht.
- Ein-Eindeutigkeit der VID
   Es wird vorgeschlagen, dass bei der Generierung der VID nicht nur die nutzerspezifischen Eingaben berücksichtigt werden, sondern darüber hinaus impliziert bei der Erstellung der VID eine Zuordnung zu einem bestimmten Server, einer Servergruppe oder Servertyp festgelegt wird. So wie in Fig. 1 gezeigt, werden sowohl die nutzerspezifischen (1a) als auch die serverspezifischen (1b) Attribute bei der Erzeugung der VID durch die VID Engine berücksichtigt. Die VID wird dann in (2) zum ID-Broker kommuniziert. Sobald ein Nutzer einen Dienst anfordert (3), was er jedoch nicht mit seiner realen Identität sondern der vorher bestimmten VID tut, agiert der ID-Broker als access gate (4). Zum einen wird geprüft, ob die für die VID hinterlegten Rechte einen Zugriff auf den geforderten Dienst erlauben, zum andern kann nur ein speziell vertrauenswürdiger Server, der vorher bei der Erstellung der VID berücksichtigt wurde, die Anfrage bearbeiten. Andere Server, welche beispielsweise bei man-in-the-middle Attacken oder falschem Routing angesprochen worden wären, sind nicht in der Lage, auf die Diensteanforderung mit der benutzten VID zu antworten.
- Lebensdauer einer VID → einschränken
   Es wird vorgeschlagen, dass die zeitliche Gültigkeit einer VID begrenzt ist. Die maximal gültige Lebensdauer wird dabei gleich bei der VID Erzeugung festgelegt und entsprechend an den ID-Broker übermittelt, siehe (5) in Fig. 2. Wenn nun ein Nutzer unter dieser VID einen Dienst anfordert (6), entscheidet zunächst der ID-Broker, ob die VID generell berechtigt, diesen Dienst zu abonnieren und dann, ob die verwendete VID noch im definierten Zeitfenster arbeitet (7).
- Transportbezug → verknüpfen
   Es wird vorgeschlagen, dass VIDs auch für den Einmalgebrauch konzipiert werden können, um einen ganz bestimmten Dienst einmalig freizuschalten. Auf diese Weise können VIDs ähnliche Aufgaben übernehmen, wie sie beispielsweise Transaktionsnummern (TAN) beim online banking wahrnehmen. Da die Anzahl der VIDs nicht begrenzt ist, kann die VID Engine einen entsprechenden (dienstspezifischen) Vorrat erzeugen und dem ID-Broker bekannt machen, siehe (8) in Fig. 3. Möchte nun ein Nutzer einen bestimmten Dienst belegen, kann er diesen unter Angabe der relevanten VIDs anfordern. Neu ist hierbei, dass im Rahmen der Session für uplink und downlink jeweils eigene Kriterien und Anforderungen für die Übertragung gelten sollen. Der Nutzer wählt daher für up- und downlink je eine eigene VID (9). Die einzelnen Streams sind dabei Bestandteil der gleichen Session, was in Fig. 3 durch den gemeinsamen Session Anker beim Server bzw. beim Nutzer dargestellt wird.
- Konzeptrealisierung
   Es wird vorgeschlagen, dass das in dieser Anmeldung beschriebene erweiterte VID Konzept durch die Einbettung beteiligter Funktionen in ein adaptiertes IMS System realisiert wird, siehe Fig. 4. Die zur Erzeugung der VIDs notwendige VID Engine ist dabei Bestandteil einer erweiterten HSS Funktionalität (HSS') mit dem Vorteil, dass auf alle nutzerspezifischen Eigenschaften sowie gespeicherte Profile und Policen unmittelbar zugegriffen werden kann, ohne dass sicherheitsrelevante Daten das HSS verlassen müssten. Der ID-Broker übernimmt steuerungstechnische Aufgaben und gehört daher zu einer erweiterten CSCF Umgebung. Alle weiteren Information, die der ID-Broker benötigt bekommt er über die Cx' Schnittstelle, insbesondere VID relevante Angaben. Beim S-CSCF/ID-Broker werden die Informationen dann genutzt, um die ISC Schnittstelle zu den Anwendungsservern zu konfigurieren. Hierzu werden spezifische Filter geschaltet, welche bei zukünftigen Dienstanfragen von einem Nutzer an einen Anwendungsserver entscheiden, ob die zu einer bestimmten VID gehörenden Anfragen weitergeleitet oder blockiert werden. Weiterhin können über die ISC' Schnittstelle die VIDs zu den Anwendungsservern kommuniziert werden, so dass ein Drittanbieter auf Basis dieser VID eine Gebührenerfassung bei Bezahldiensten hinterlegen kann.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang und den Geist der folgenden Ansprüche zu verlassen. Insbesondere umfasst die Erfindung ebenfalls Ausführungsformen mit jeglicher Kombination von Merkmalen, die vorstehend oder nachfolgend zu verschiedenen Ausführungsformen genannt oder gezeigt sind. Zum Beispiel kann die Erfindung auch durch folgende weitere konstruktive Variationen realisiert sein:

Eine Entität und Methode zur Erzeugung von VIDs (VID Engine) unter Berücksichtigung von benutzerspezifischen Attributen/Profilen, Personalisierung und Nutzer-Kontext, dadurch gekennzeichnet dass VIDs
• eine ein-eindeutige Beziehung kennzeichnen und
   ○ bereits bei der VID Generierung die verschiedenen Parteien berücksichtigt werden;
   ○ die verschiedenen Parteien sowohl einzeln als auch in Gruppen angesprochen werden können;
   ○ die Zielpartei nicht notwendigerweise genannt werden muss, so dass auch Abwärtskompatibilität mit Stand der Technik VIDs weiterhin möglich ist;
• eine begrenzte Lebensdauer haben und nur temporär anwendbar sind
   ○ wobei optionale Refresh-Mechnismen die Gültigkeit von VIDs verlängern können;
   ○ und sich abgelaufene VIDs im System selbst terminieren, austragen und löschen;
• jeweils session/service/stream spezifisch generiert werden und
   ○ und nur für einen bestimmten Zweck existieren;
   ○ zur Einmalnutzung gedacht sind;
   ○ unterschiedliche VIDs mit unterschiedlichen Attributen für uplink und downlink zum Einsatz kommen können.

Ein System zur Erbringung von Multimedia-Diensten unter Wahrung der Privatsphäre bei sicherer gegenseitiger Authentifizierung, gekennzeichnet durch
• die Erweiterung des IMS Basiskonzepts um VID relevante Komponenten, die
   ○ insbesondere die Einführung einer VID-Engine und eines ID-Brokers vorsehen, wobei
      ■ die VID-Engine teil einer erweiterten HSS Funktionalität darstellt;
      ■ der ID-Broker teil einer erweiterten CSCF Funktionalität darstellt;
   ○ die Schnittstelle Cx um die zur Übertragung VID relevanter Aspekte erweitert (Cx')
   ○ die Schnittstelle ISC' als Filter für VID relevante System- und Dienstesteuerung installiert;
• die Steuerung der ISC' Schnittstelle durch den ID-Broker und das S-CSCF die Möglichkeit der Kommunikation der VIDs über das ISC' Interface an den Diensteanbieter.

Die Erfindung umfasst ebenfalls einzelne Merkmale in den Figuren auch wenn sie dort im Zusammenhang mit anderen Merkmalen gezeigt sind und/oder vorstehend oder nachfolgend nicht genannt sind.

Im Weiteren schließt der Ausdruck "umfassen" und Abteitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Die bloße Tatsache, dass bestimmte Masse in zueinander verschiedenen abhängigen Ansprüchen aufgeführt sind, bedeutet nicht, dass eine Kombination dieser Masse nicht vorteilhaft verwendet werden kann. Ein Computerprogramm kann auf einem geeigneten Medium gespeichert sein und/oder vertrieben werden, wie beispielsweise auf einem optischen Speichermedium oder einem Festmedium, das zusammen mit oder als Teil von anderer Hardware bereitgestellt wird. Es kann auch in anderer Form vertrieben werden, wie beispielsweise über das Internet oder andere verkabelte oder unverkabelte Telekommunikationssysteme. Alle Bezugszeichen in den Ansprüchen sind nicht als den Umfang der Ansprüche einschränkend zu verstehen.

**Abkürzungen**

| | |
|---|---|
| AS | Application (Anwednungs) Server |
| Cx | Schnittstelle zwischen HSS und CSCF |
| HSS | Home Subscriber Server |
| IMS | IP Multimedia Subsystem |
| ISC | IMS Service Control |
| S-CSCF | Serving Call Session Control Function |
| TAN | Transaktionsnummer |
| VID | Virtuelle Identität |
| VIDID | VID Identifier |

## Patentansprüche

1. Verfahren zur Erzeugung einer virtuellen Identität unter Berücksichtigung von benutzerspezifischen Attributen/Profilen, Personalisierung und Nutzer-Kontext, die Datenfelder zu einer Nutzerpartei umfasst, **dadurch gekennzeichnet, dass** die virtuelle Identität eine ein-eindeutige Beziehung kennzeichnet, indem sie Datenfelder zu mindestens einer Zielpartei umfasst.

2. Verfahren nach Anspruch 1, bei dem die virtuelle Identität so erzeugt wird, dass verschiedene Zielparteien sowohl einzeln als auch in Gruppen ansprechbar sind.

3. Verfahren nach Anspruch 1 oder 2, bei dem die virtuelle Identität so erzeugt wird, dass zur Verwendung der virtuellen Identität nicht notwendigerweise Daten in die Datenfelder der Zielpartei eingetragen sein müssen, so dass auch Abwärtskompatibilität mit virtuellen Identitäten aus dem Stand der Technik möglich ist.

4. Verfahren nach einem der vorangehenden Ansprüche, bei dem die virtuelle Identität eine begrenzte Gültigkeit aufweist und nur temporär anwendbar ist, wobei sie sich bei Ablauf selbst terminiert, austrägt und löscht.

5. Verfahren nach Anspruch 4, bei dem die Gültigkeit der virtuellen Identität durch einen optionalen Refresh-Mechanismus verlängerbar ist.

6. Verfahren nach einem der vorangehenden Ansprüche, bei dem die virtuelle Identität session/service/stream spezifisch generiert wird, so dass sie nur für einen bestimmten Zweck existiert und zur Einmalnutzung vorgesehen ist.

7. Verfahren nach Anspruch 6, bei dem die virtuelle Identität ein Attribut für uplink oder ein Attribut für downlink umfasst.

8. Computerprogramm zur Durchführung des Verfahrens nach einem der vorangehenden Ansprüche.

9. System zur Erbringung von Multimedia-Diensten unter Wahrung der Privatsphäre bei sicherer gegenseitiger Authentifizierung, das ein standardisiert aufgebautes IP Multimedia Subsystem umfasst, **dadurch gekennzeichnet, dass** das IP Multimedia Subsystem eine VID-Engine als Teil einer erweiterten HSS Funktionalität , einen ID-Broker als Teil einer erweiterten CSCF Funktionalität und eine Schnittstelle ISC' als Filter für virtuelle Identität relevante System- und Dienstesteuerung aufweist, wobei eine Schnittstelle Cx des IP Multimedia Subsystems um die zur Übertragung virtueller Identität relevanter Aspekte erweitert ist (Cx').

10. System nach Anspruch 9, bei dem die ISC' Schnittstelle durch den ID-Broker und das S-CSCF des IP Multimedia Subsystems steuerbar ist.

11. System nach Anspruch 9 oder 10, bei dem eine virtuelle Identität über das ISC' Interface an einen Diensteanbieter kommunizierbar ist.
